# EUROPÄISCHE PATENTSCHRIFT

(11) **EP 0 882 176 B1**
(45) Veröffentlichungstag und Bekanntmachung des Hinweises auf die Patenterteilung: **23.08.2000**
(21) Anmeldenummer: 97904385.8
(22) Anmeldetag: 06.02.1997
(51) Int. Cl.: F01M 1/10, F01M 11/03

(54) **ABTRENNVORRICHTUNG**
SEPARATOR
DISPOSITIF SEPARATEUR

(30) Priorität: 20.02.1996 DE 19606182
(43) Veröffentlichungstag der Anmeldung: 09.12.1998
(73) Patentinhaber: FILTERWERK MANN & HUMMEL GmbH, 71631 Ludwigsburg (DE)
(72) Erfinder: SCHETTER, Martin, D-74354 Besigheim (DE)
(74) Vertreter: Voth, Gerhard, Dipl.-Ing.
(86) Internationale Anmeldenummer: EP9700537
(87) Internationale Veröffentlichungsnummer: WO9731180

(56) Entgegenhaltungen:
- EP-A- 0 171 138
- EP-A- 0 699 826
- DE-B- 1 166 155
- DE-U- 29 602 434
- GB-A- 2 132 693
- US-A- 3 125 083
- REVUE TECHNIQUE DIESEL, Nr. 167, 1.Januar 1991, BOULOGNE-BILLANCOURT FR, Seiten 9-10, 12 - 13, 15 - 18, 20 - 21, XP000201066 "LA FILTRATION DES HUILES MOTEURS"
- MTZ MOTORTECHNISCHE ZEITSCHRIFT, Bd. 55, Nr. 1, 1.Januar 1994, Seite 68, 70/71 XP000423100 BRIEDEN T ET AL: "OLFILTER-MODULE FUR VERBRENNUNGSMOTOREN OILFILTER-MODULES FOR COMBUSTION ENGINES"

## Beschreibung

Die Erfindung betrifft eine Vorrichtung zum Abtrennen von Verunreinigungen aus dem Schmieröl einer Verbrennungskraftmaschine.

Derartige Vorrichtungen sind bekannt, zum Beispiel in der DE-PS 43 06 431. Will man derartige Vorrichtungen, zum Beispiel in eng bauenden Motorräumen von Verbrennungskraftmaschinen verwenden, so ist daran nachteilig, daß für eine derartige Vorrichtung häufig der nötige Bauraum fehlt.

Die DE-A 11 66 155 zeigt eine integrierte Anordnung mit Filter und Zentrifuge, in deren gemeinsamen Gehäusebereich verschiedene Ventile untergebracht sind. Weiterhin läßt sich aus "MTZ Motortechnische Zeitschrift 55(1994) Januar, Nummer 1" die Möglichkeit entnehmen, ein Ölfiltermodul zusätzlich mit einem Ölnebelabscheider zu versehen, an dem das Kurbelgehäuseentlüftungsventil angeordnet ist.

Hiermit sind Anordnungen für Filter und Zentrifuge offenbart, die grundsätzlich zum Einbau in beengte Platzverhältnisse von Motorräumen geeignet sind. Die Montage ist jedoch kompliziert und die Einsparung von Bauraum nur begrenzt.

Aufgabe der Erfindung ist es daher, eine Vorrichtung für das Ölmanagement einer Brennkraftmaschine zu schaffen, welche kostengünstig in der Herstellung, zuverlässig im Betrieb und wartungsfreundlich ist. Diese Aufgabe wird durch die Merkmale des Patentanspruches 1 gelöst. Erfindungsgemäß wird die Aufgabe dadurch gelöst, daß der Filtereinsatz sowie die Zentrifuge in nebeneinander angeordneten Gehäusen befindlich sind. Hierdurch wird eine kompakte Bauform erreicht.

Die beiden nebeneinander angeordneten Gehäuse sind zu einem einheitlichen Bauteil zusammengefaßt, welches einen gemeinsamen Gehäusebereich aufweist. Hierdurch ist dieses Gehäuse einfach in der Herstellung. Die zur Versorgung notwendigen Kanäle sind in das Bauteil integriert. Auch hierdurch wird Bauraum eingespart.

Der Vorteil der Erfindung ergibt sich dadurch, daß ein Kurbelgehäuseentlüftungsventil unter der Zentrifuge angeordnet ist. Dieses ist mittels einer Verbindungsöffnung mit dem Kurbelgehäuse der Verbrennungskraftmaschine verbunden. Das Kurbelgehäuseentlüftungsventil kann damit ebenfalls platzsparend in die Anordnung integriert werden, da ein zusätzliches Ventilgehäuse entfällt.

Dadurch wird es möglich, daß die beiden Funktionseinheiten Filtereinsatz bzw. Zentrifuge an beinah beliebigen Orten im Motorraum einer Verbrennungskraftmaschine angeordnet werden können. Geeigneterweise achtet man deshalb auf kurze Leitungswege, um die Druckverluste gering zu halten.

Vorteilhafterweise kann man vorsehen, daß in wenigstens einem des die Gehäuse verbindenden Schmierölkanäle ein Druckregelventil enthalten ist. Dieses sorgt dafür, daß zum Beispiel in der Zentrifuge optimale Arbeitsbedingungen herrschen.

In einer weiteren vorteilhaften Ausführung kann man vorsehen, daß die Zentrifuge und/oder der Filtereinsatz im Bereich eines Funktionselements der Brennkraftmaschine angeordnet sind. Dies garantiert, daß sogenannte Funktionseinheiten gebildet werden können, die zum

Beispiel auf steuer- bzw. regelungs- oder antriebstechnische Elemente gemeinsam zugreifen können. Dies gilt in gleichem Maße für gemeinsam verwendbare Gehäusewandungen.

Eine andere vorteilhafte Weiterentwicklung sieht vor, daß das Funktionselement das Kurbelgehäuseentlüftungsventil ist, welches sich aufgrund seiner geometrischen Ausgestaltung anbietet.

Vorteilhafterweise kann man vorsehen, daß die Zentrifuge und/oder der Filtereinsatz und das Funktionselement wenigstens eine gemeinsame Gehäuseseite aufweist. Durch die Bildung von Funktionseinheiten, die zum Beispiel gemeinsame Gehäuseseiten verwenden, läßt sich ein Gewichtseinsparungseffekt erzielen. Die räumlichen Ausdehnungen lassen sich dadurch ebenfalls reduzieren.

Eine andere vorteilhafte Weiterbildung sieht vor, daß die Längsachsen von Filter und Zentrifuge parallel zueinander angeordnet sind.

In einer anderen vorteilhaften Weiterbildung der Erfindung ist vorgesehen, daß das Filter bei geöffnetem Filtergehäuse herausnehmbar bzw. auswechselbar ist. Dies erleichtert die Wartung bzw. den Austausch der Elemente.

In einer weiteren vorteilhaften Ausgestaltung kann man vorsehen, daß der Zuleitungskanal der Vorrichtung dem Zuleitungskanal der Zentrifuge entspricht. In dieser Variante wird die Zentrifuge rohölseitig betrieben.

In einer anderen vorteilhaften Weiterbildung der Erfindung ist vorgesehen, daß der Ableitungskanal der Vorrichtung dem Zuleitungskanal der Zentrifuge entspricht. In diesem Fall wird die Zentrifuge reinölseitig betrieben.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung sind in den Zeichnungen dargestellt und werden im folgenden näher erläutert. Die Zeichnungen zeigen:
- Figur 1: eine Draufsicht der Vorrichtung,
- Figur 2: eine Ansicht von unten,
- Figur 3: einen Schnitt entlang der Linie C-C,
- Figur 4a, b: einen Schnitt entlang der Linie A-A,
- Figur 5: einen Schnitt entlang der Linie C-E,
- Figur 6a, b: einen Schnitt entlang der Linie C-E.

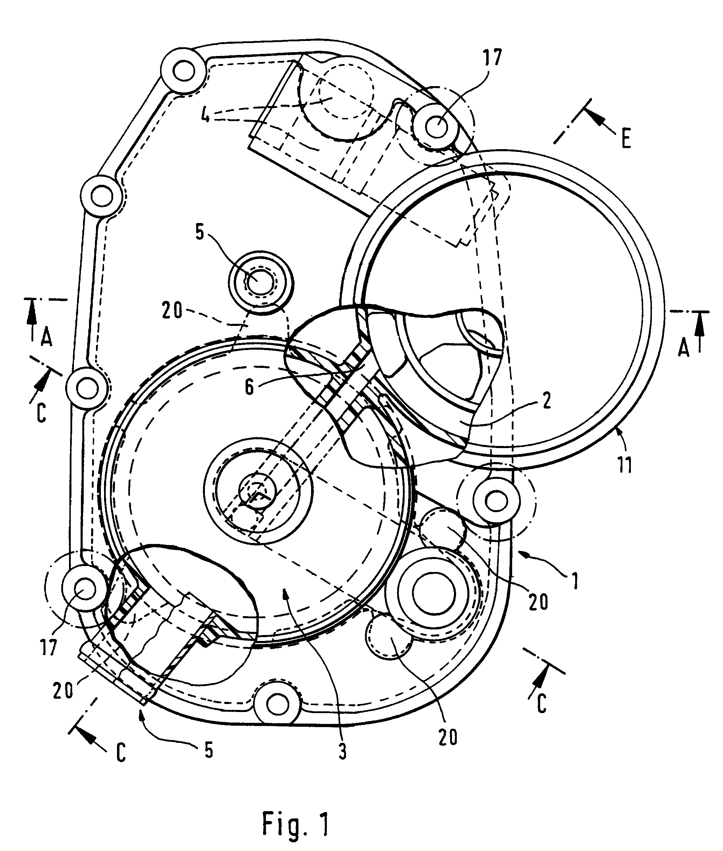

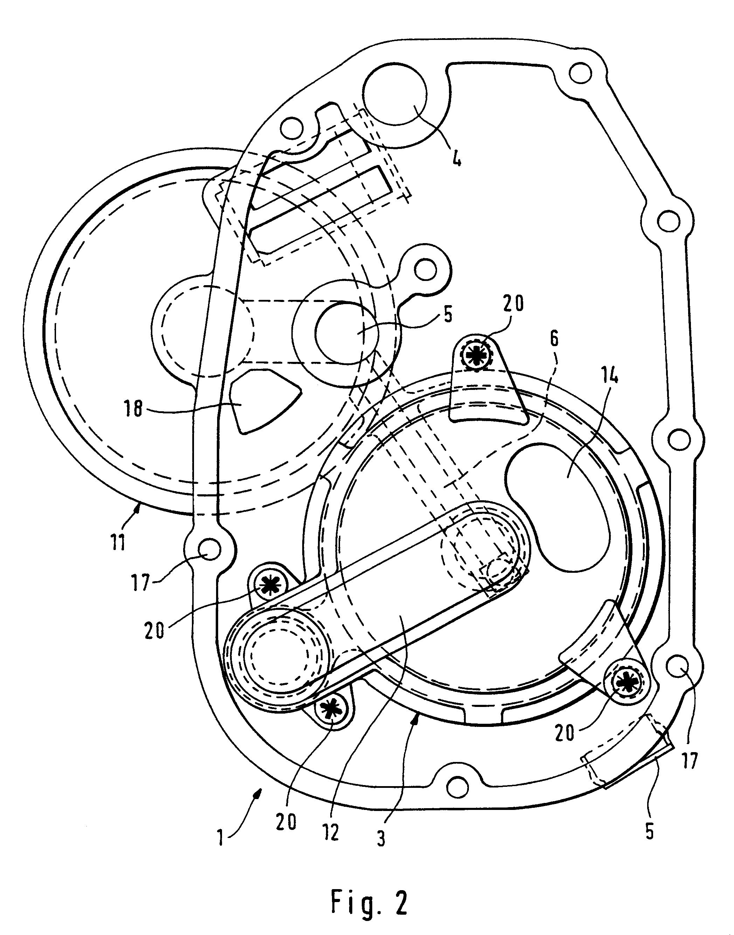

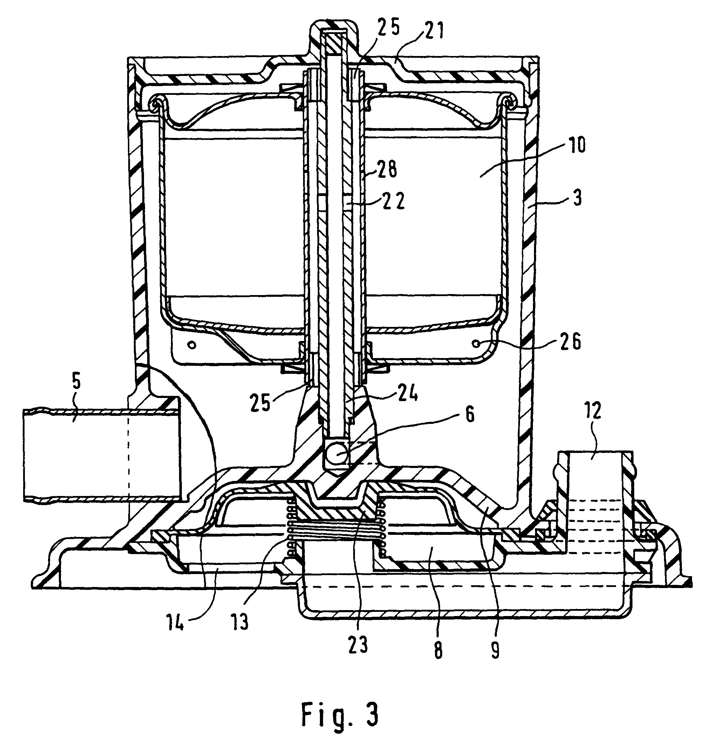

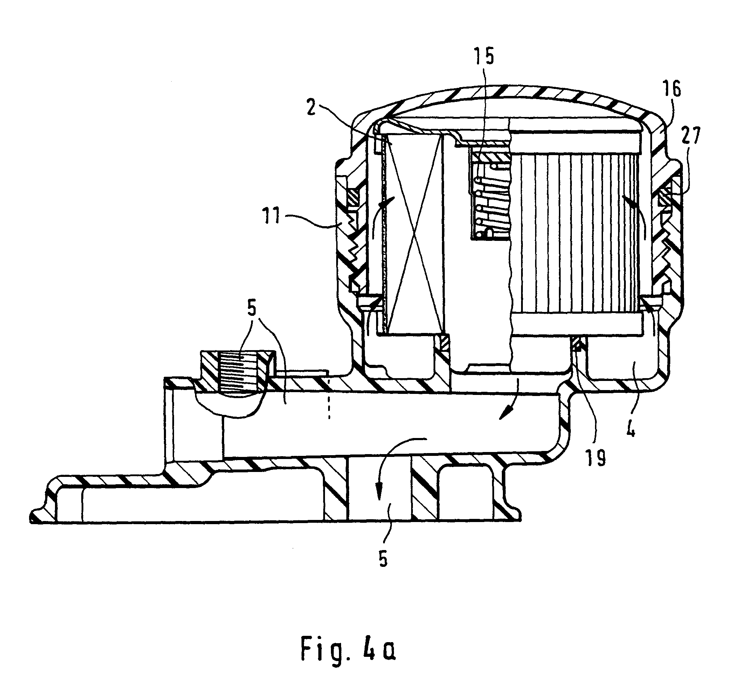

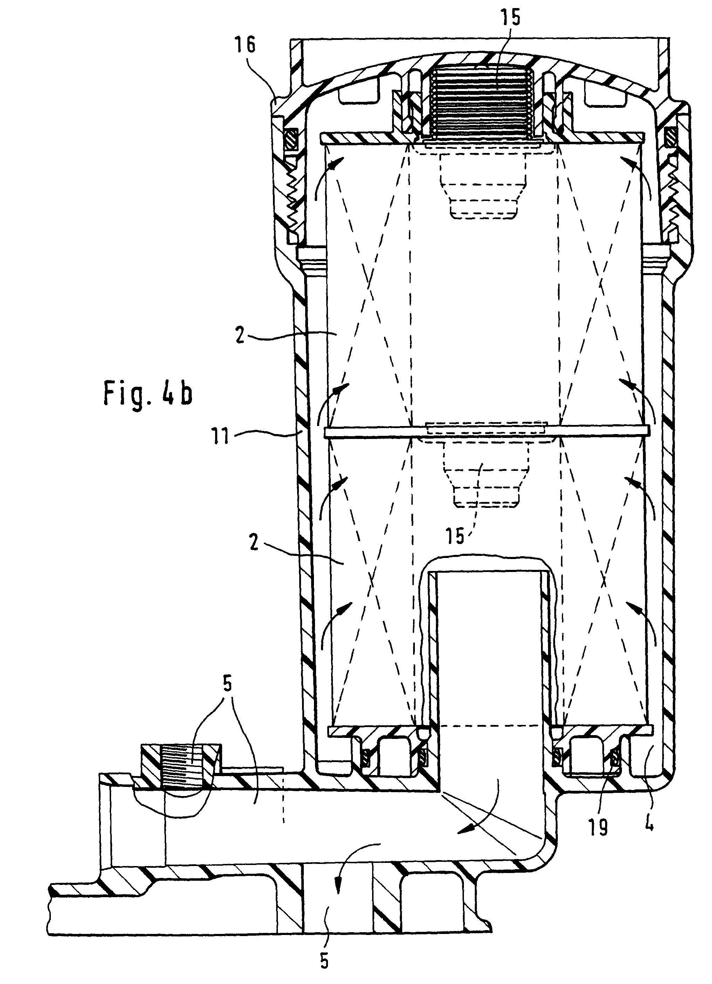

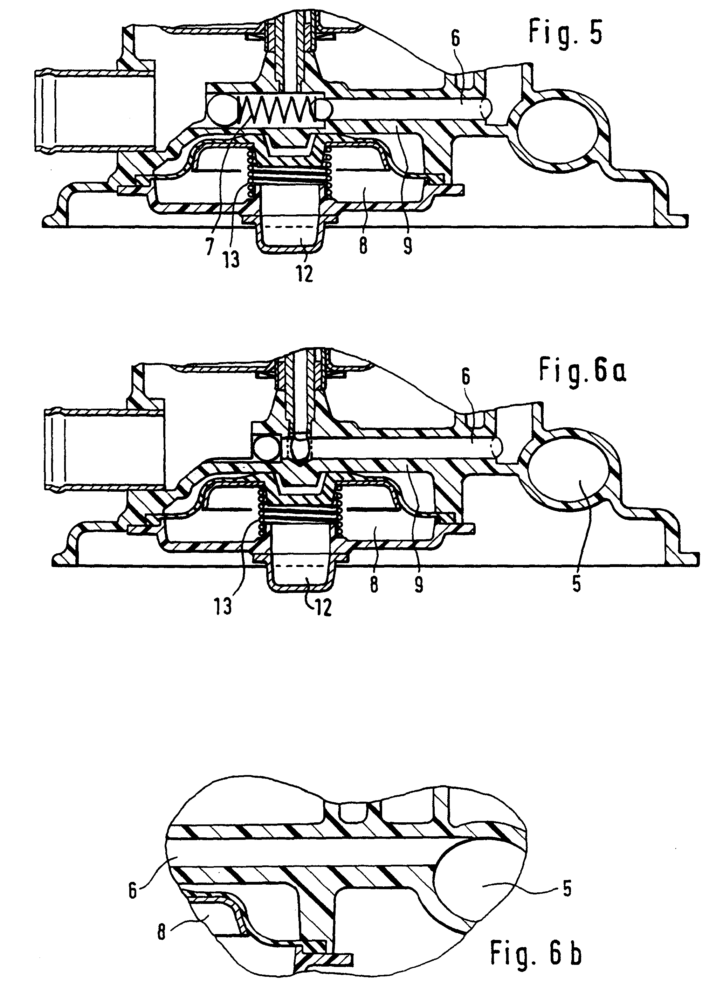

Die Vorrichtung 1, die in den Figuren 1 und 2 dargestellt ist, besteht aus einem Filtereinsatz 2, der ind den Figuren 1, 4a und 4b zu sehen ist und einem in Figur 3 abgebildeten Zentrifugenrotor 10, die, wie in Figur 1 dargetellt ist, mittels einem kommunizierendem Schmierölkanal 6 verbunden sind. Die Vorrichtung 1 wird mittels in den Figuren 1 und 2 gezeigten Gehäusebefestigungsbohrungen 17 und nicht näher dargestellten Schrauben an der Verbrennungskraftmaschine befestigt. Sowohl der Filtereinsatz 2 als auch der Zentrifugenrotor 10 befinden sich in separaten Gehäusen. Das Gehäuse 11 von Filtereinsatz 2, das in den Figuren 1, 2, 4a und 4b dargestellt wird, verfügt über einen in den Figuren 1, 2 und 4b gezeigten Zuleitungskanal 4, über den im Falle der reinölseitigen Beaufschlagung der Zentrifuge Rohöl zufließt, welches nach Passieren des Filtereinsatzes 2 über den in den Figuren 1, 2, 3, 5, 6a und 6b dargestellten kommunizierenden Schmierölkanal 6 in den Zentrifugenrotor 10 über den in der Zentrifügenachse 24 integrierten Zulauf 22 und der im Zentrifugenrotor 10 vorgesehenen, in Figur 3 gezeigten Zulauföffnung 28 gelangt. In Figur 3 wird ebenfalls dargestellt, wie das in den Zentrifugenrotor 0 gelangende Öl durch eine hohle Zentrifügenachse 24 geführt wird, wobei die Zentifugenachse 24 im Zentrifugengehäuse 3 und dem Zentrifugengehäusedeckel 21 so verankert ist, daß in Verbindung mit der dichtenden Zentrifugenlagerung 25 das Öl lediglich über die Zentrifugenrotordüsen 26 in den den Zentrifugenrotor umgebenden Raum des Zentrifugengehäuses 3 gelangen kann. Von dort aus verläßt das gefilterte und zentrifugierte Öl die Vorrichtung 1 über den am Gehäuse der Zentrifuge 3 befindlichen, in den Figuren 1, 2, 3, 4a, 4b, 6a und 6b dargestellten Ableitungskanal 5 und zwar drucklos.
Die Anordnung des Zentrifugengehäuses 3 erfolgt an der Verbrennungskraftmaschine in der Weise, wie die in Figur 3 dargestellt wird, daß das Kurbelgehäusentlüftungsventil 8 das eine mit einer Ventilplatte 23 kommunizierende Schraubenfeder 13, die ebenfalls in den Figuren 5 und 6a sichtbar ist, aufweist und über den in den Figuren 2, 3, 5 und 6a gezeigten Entlüftungskanal 12 entlüftet wird, und das Zentrifugengehäuse 3 eine gemeinsame Gehäusewandung 9, die zusätzlich in den Figuren5 und 6a zu sehen ist, aufweisen. Das Kurbelgehäuseentlüftungsventil 8, das zusätzlich in den Figuren 5, 6a und 6b gezeigt wird, hat mittels Verbindungsöffnung 14, die in Figur 3 erscheint, Kontakt zum nicht näher dargestellten Kurbelgehäuse der Verbrennungskraftmaschine. Das Zentrifugengehäuse 3 ist mittels der in Fig. 1 und Fig. 2 dargestellten Zentrifugengehäusebefestigungen 20 an der Vorrichtung 1 befestigt.
Sowohl das Gehäuse 11 von Filtereinsatz 2 als auch das von Zentrifuge 3 sind zu öffnen (Fig. 3,4), so, daß nachdem sowohl der in den Figuren 4a und 4b dargestellten Filtergehäusedeckel 16 als auch der Zentrifugengehäusedeckel 21 abgenommen sind, bei geöffneten Gehäusen Filtereinsatz 2 oder Zentifugenrotor 10 herausnehmbar bzw. auswechselbar sind. Die Gehäusedeckel 16, 21 sind mittels Schraub- oder Schnappverbindung mit den Gehäusen derart verbunden, daß im Betriebszustand kein Öl das Gehäuseinnere verlassen kann, wie z. B. in Fig. 4a durch Dichtung 27 dargestellt.
Im mit den Gehäusen des Filtereinsatzes 2 und der Zentrifuge 3 kommunizierenden Schmierölkanal 6 befindet sich ein Druckregelventil 7, das in Figur 5 dargestellt ist und als Kugel-Feder-Ventil ausgeführt ist.
In einer alternativen Ausgestaltung weist die Vorrichtung 1, wie in Fig. 4b dargestellt, zwei Filtereinsätze 2 auf, die in einem Gehäuse so untergebracht sind, daß sie nach dem Öffnen des Gehäuses ausgewechselt werden können. Die Filtereinsätze 2 sind im eingebauten Zustand mittels der in den Figuren 4a und 4b dargestellten Filterabdichtung 19 zur
Filterraumentleerungsöffnung 18, die in Figur 2 gezeigt wird, hin abgedichtet. Im Falle der Auswechslung der Filtereinsätze 2 kann das im Filterraum vorhandene Öl drucklos in das Kurbelgehäuse abfließen. Die Filtereinsätze 2 weisen, wie in den Figuren 4a und 4b dargestellt, Filter-Umgehungsventile 15 auf, die bei zugesetztem Filter den Öldruck nicht abreißen lassen.
In einer weiteren alternativen Ausgestaltung wird die Zentrifuge rohölseitig beaufschlagt, wie dies in Figur 6a dargestellt wird. Die im Vergleich dazu dargestellte reinölseitige Beaufschlagung der Zentrifuge ist Figur 6b zu entnehmen. In den vorstehend geschilderten Ausgestaltungen wird die Zentrifuge im Nebenstrom betrieben, der Ölablauf aus der Zentrifuge erfolgt drucklos, das zentrifugierte Öl fließt beispielsweise in die nicht näher dargestellte Ölwanne.

### Bezugszeichenliste

- 1: Vorrichtung
- 2: Filtereinsatz
- 3: Zentrifugengehäuse
- 4: Zuleitungskanal
- 5: Ableitungskanal
- 6: kommunizierender Schmierölkanal
- 7: Druckregelventil
- 8: Kurbegehäuseentlüftungsventil
- 9: gemeinsame Gehäusewandung
- 10: Zentrifugenrotor
- 11: Gehäuse des Filtereinsatzes
- 12: Entlüftungskanal
- 13: Schraubenfeder
- 14: Verbindungsöffnung
- 15: Filter-Umgehungsventil
- 16: Filtergehäusedeckel
- 17: Gehäusebefestigungsbohrung
- 18: Filterraumentleerungsöffnung
- 19: Filterabdichtung
- 20: Zentrifugengehäusebefestigung
- 21: Zentrifugengehäusedeckel
- 22: Zulauf
- 23: Ventilplatte
- 24: Zentrifugenachse
- 25: Zentrifugenlagerung
- 26: Zentrifugenrotordüse
- 27: Dichtung
- 28: Zulauföffnung im Zentrifugenrotor

## Patentansprüche

1. Vorrichtung zum Abtrennen von Verunreinigungen aus dem Schmieröl einer Verbrennungskraftmaschine, wobei die Vorrichtung (1) wenigstens einen Filtereinsatz (2), eine mittels durchströmenden Schmieröls antreibbare Zentrifuge und mindestens einen Zuleitungskanal (4) für zu reinigendes Schmieröl und mindestens einen Ableitungskanal (5) für gereinigtes Schmieröl aufweist, wobei der Filtereinsatz (2) und die mittels durchströmendem Schmieröl antreibbare Zentrifuge in separaten, wenigstens mittels einem kommunizierenden Schmierölkanal (6) verbundenen, nebeneinander angeordneten Gehäusen befindlich sind, deren Mittelachsen parallel verlaufen, dadurch gekennzeichnet, daß ein Kurbelgehäuseentlüftungsventil (8) unter der Zentrifuge mit einer gemeinsamen Gehäusewandung untergebracht ist, wobei das Kurbelgehäuseentlüftungsventil (8) mittels einer Verbindungsöffnung mit dem Kurbelgehäuse der Verbrennungskraftmaschine kommuniziert.

2. Vorrichtung nach Anspruch 1, dadurch gekennzeichnet, daß in wenigstens einem des die Gehäuse verbindenden Schmierölkanäle ein Druckregelventil (7) enthalten ist.

3. Vorrichtung nach einem oder mehreren der vorgenannten Ansprüche, dadurch gekennzeichnet, daß die Zentrifuge und/oder der Filtereinsatz (2) im Bereich eines Funktionselements der Brennkraftmaschine angeordnet sind.

4. Vorrichtung nach einem oder mehreren der vorgenannten Ansprüche, dadurch gekennzeichnet, daß der Filtereinsatz (2) bei geöffnetem Filtergehäuse herausnehmbar bzw. auswechselbar ist.

5. Vorrichtung nach einem oder mehreren der vorgenannten Ansprüche, dadurch gekennzeichnet, daß der Zentrifugenrotor (10) der Zentrifuge bei geöffnetem Zentrifugengehäuse(3) herausnehmbar bzw. auswechselbar ist.

6. Vorrichtung nach einem oder mehreren der vorgenannten Ansprüche, dadurch gekennzeichnet, daß der Zuleitungskanal der Vorrichtung (1) dem Zuleitungskanal (4) der Zentrifuge entspricht.

7. Vorrichtung nach einem oder mehreren der vorgenannten Ansprüche, dadurch gekennzeichnet, daß der Zuleitungskanal der Vorrichtung (1) dem Zuleitungskanal (4) des Filters (2) entspricht.

## Claims

1. Apparatus for separating impurities from the lubricating oil of an internal combustion engine, the apparatus (1) including at least one filter insert (2), a centrifuge which is drivable by means of lubricating oil traversing therethrough, at least one supply duct (4) for lubricating oil to be filtered, and at least one discharge duct (5) for filtered lubricating oil, the filter insert (2) and the centrifuge, which is drivable by means of lubricating oil traversing therethrough, being situated in separate housings, which are connected at least by means of one communicating lubricating oil duct (6) and are disposed adjacent one another, and the central axes of said housings extending parallel to one another, characterised in that a crankcase vent valve (8) is accommodated beneath the centrifuge with a common housing wall, the crankcase vent valve (8) communicating with the crankcase of the internal combustion engine by means of a connecting aperture.

2. Apparatus according to claim 1, characterised in that a pressure regulating valve (7) is included in at least one of the lubricating oil ducts which connect the housings.

3. Apparatus according to one or more of the aforesaid claims, characterised in that the centrifuge and/or the filter insert (2) are disposed in the region of an operational component part of the internal combustion engine.

4. Apparatus according to one or more of the aforesaid claims, characterised in that the filter insert (2) is removable or interchangeable when the filter housing is open.

5. Apparatus according to one or more of the aforesaid claims, characterised in that the centrifuge rotor (10) of the centrifuge is removable or interchangeable when centrifuge housing (3) is open.

6. Apparatus according to one or more of the aforesaid claims, characterised in that the supply duct of the apparatus (1) corresponds to the supply duct (4) of the centrifuge.

7. Apparatus according to one or more of the aforesaid claims, characterised in that the supply duct of the apparatus (1) corresponds to the supply duct (4) of the filter (2).

## Revendications

1. Dispositif pour séparer des impuretés de l'huile de graissage d'un moteur à combustion interne, dans lequel le dispositif (1) présente au moins une cartouche de filtre (2), une machine centrifuge pouvant être entraînée au moyen de l'huile de graissage passant à travers et au moins un canal d'alimentation (4) pour l'huile de graissage à nettoyer et au moins un canal d'évacuation (5) pour l'huile de graissage nettoyée, la cartouche de filtre (2) et la machine centrifuge, qui peut être entraînée au moyen de l'huile de graissage passant à travers, se trouvant dans des carters séparés, reliés au moins au moyen d'un canal d'huile de graissage (6) communiquant, et disposés à côté l'un de l'autre, carters dont les axes médians s'étendent en parallèle,
caractérisé en ce que
une soupape de désaération du carter du vilebrequin (8) est logée en dessous de la machine centrifuge avec une paroi de carter commune, la soupape de désaération du carter du vilebrequin (8) communiquant avec le carter du vilebrequin du moteur à combustion interne au moyen d'un orifice de liaison.

2. Dispositif selon la revendication 1,
caractérisé en ce que
une soupape de réglage de la pression (7) est contenue dans au moins l'un des canaux d'huile de graissage qui relie les carters.

3. Dispositif selon une ou plusieurs des revendications précédentes,
caractérisé en ce que
la machine centrifuge et/ou la cartouche de filtre (2) sont disposées dans la zone d'un élément fonctionnel du moteur à combustion interne.

4. Dispositif selon une ou plusieurs des revendications précédentes,
caractérisé en ce que
la cartouche de filtre (2) peut être enlevée ou changée quand le carter du filtre est ouvert.

5. Dispositif selon une ou plusieurs des revendications précédentes,
caractérisé en ce que
le rotor (10) de la machine centrifuge peut être enlevé ou changé quand le carter (3) de la machine centrifuge est ouvert.

6. Dispositif selon une ou plusieurs des revendications précédentes,
caractérisé en ce que
le canal d'alimentation du dispositif (1) correspond au canal d'alimentation (4) de la machine centrifuge.

7. Dispositif selon une ou plusieurs des revendications précédentes,
caractérisé en ce que
le canal d'alimentation du dispositif (1) correspond au canal d'alimentation (4) du filtre (2).
